# EUROPEAN PATENT APPLICATION

(11) **EP 2 249 131 A1**
(43) Date of publication of application: **10.11.2010**
(21) Application number: 09717874.3
(22) Date of filing: 24.02.2009
(51) Int. Cl.: G01F 3/22

(54) **GAS METER AND GAS METERING SYSTEM**

(30) Priority: 07.03.2008 JP 2008057353; 07.03.2008 JP 2008057354; 07.03.2008 JP 2008058786
(71) Applicant: Panasonic Corporation, Kadoma-shi Osaka 571-8501 (JP); The High Pressure Gas Safety Institute of Japan, Tokyo 105-8447 (JP)
(72) Inventor: YOKOHATA, Mitsuo, Osaka, 540-6207 (JP); NAKAMURA, Hirozumi, Osaka, 540-6207 (JP); SHIRASAWA, Tadanori, Osaka, 540-6207 (JP); KUBO, Kazuo, Osaka, 540-6207 (JP); NAMBA, Mitsuo, Tokyo (JP); SAITO, Hisashi, Tokyo (JP)
(74) Representative: Schwabe - Sandmair - Marx
(86) International application number: PCT/JP2009/000817
(87) International publication number: WO 2009/110193

(57) **Abstract**

A challenge to be met by the present invention is to enable appropriate setting of safety function according to a use environment and enhance safety function.

An IC card (118) stores data pertaining to the quantity of available gas and at least one safety function program. An IC card reading unit (122) reads information stored in the IC card (118). From the read information, an IC card determination unit (126) determines whether or not the IC card (118) is normal. A safety function detection unit (128) detects a safety function program from the read information and stores the program in a safety function storage unit (130). When the IC card (118) is normal, a function setting unit (116) imparts a safety function program to a monitoring unit (112). A remaining available quantity count unit (124) determines a remaining quantity of available gas from the read quantity of available gas and a flow determined by a flow computing unit (110). A control unit (114) cuts off a gas supply when an event fulfilling operating conditions for safety function has arisen and when the remaining available quantity has come to a predetermined remaining quantity.

## Description

### Technical Field

The present invention relates to a gas meter that measures a quantity of consumed gas and a gas meter system including the gas meter.

### Background Art

Some related-art gas meters that measure the quantity of consumed gas have a safety function for cutting off a gas supply channel, and the like, when a problem has arisen during usage of a gas. The safety functions include a function for cutting off a gas supply channel by means of a shutoff valve when, for instance, a seismoscope detects a predetermined seismic intensity level or more; or for cutting off the gas supply channel when a predetermined flow or a predetermined operating time is exceeded.

Patent Document 1 shows a gas meter control system that stops a gas supply by use of a communication line for automatic reading or a prepaid card system when a quantity of available gas is achieved, in order to supply the quantity of gas commensurate with a payment. Patent Document 2 discloses a network system that automatically reads the quantity of consumed water, electricity, gas, and the like, and that enables calculation and charging of a bill, checking of a water leak, transfer of information about detection of an electricity leak and a gas leak, and the like. Patent Document 3 discloses a gas management system that shuts off a gas supply at a point in time when remaining balance information about a gas bill has come to zero as a result of use of a prepaid card, thereby streamlining a meter reading service and a bill collection service.
Patent Document 1: JP-A-8-5398
Patent Document 2: JP-A-2005-18720
Patent Document 3: JP-A-2002-74497

### Disclosure of the Invention

### Problem that the Invention is to solve

There is a case where a required gas safety function changes according to an environment in which a gas meter and a gas appliance is to be disposed, such as a country and a district or according to the type of or the state of usage of a gas appliance used, while being connected, in a household of each user. For instance, in a country or a district having very little potential risk of occurrence of an earthquake, there is no great necessity for a cutoff function to be effected at the time of detection of a tremor. In relation to a function for cutting off a gas when a predetermined operating time has exceeded, it is preferable to change a continual operating time used for determination concerning a shutoff according to the quantity of flow consumed. It is difficult to change a fixed safety function as appropriate according to a gas appliance or the state of usage of a gas appliance used by each user.

The present invention has been conceived in view of the circumstance and aims at providing a gas meter and a gas meter system that enable setting of safety function according to a use environment, and the like, and enhancement of the safety function.

### Means for Solving the Problem

A gas meter of the present invention has: a flow measurement unit that measures a quantity of gas flowing through a gas passageway; a flow computing unit that computes, from a flow value measured by the flow measurement unit, predetermined flow data; an insertion unit into which there is inserted a portable storage unit that stores a quantity of available gas commensurate with a bill paid by a user and that stores a program for executing as a safety function pertaining to usage of a gas at least one safety function among a plurality of safety functions for which the user has made a selection and payment; an information reading unit that reads information stored in the storage unit inserted in the insertion unit; a remaining available quantity count unit that subtracts a flow determined by the flow computing unit from the quantity of available gas read by the information reading unit, thereby determining a remaining available quantity; a program storage unit that stores the program read by the information reading unit; and a control unit that performs predetermined processing operation when the remaining available quantity determined by the remaining available quantity count unit has reached a predetermined remaining quantity and when an event fulfilling operating conditions for safety function corresponding to the program stored in the program storage unit has arisen.

As a result, the quantity of available gas can be stored in a portable storage unit. An optimum safety function is selected from among a plurality of safety functions according to a use environment, and a program corresponding to the selected safety function can be stored. The quantity of available gas and the safety function program, which are stored in the storage unit, are read by a gas meter main unit, whereby the quantity of available gas and the safety function are set. It becomes possible to use a gas up to a predetermined remaining quantity. When an event fulfilling operating conditions for safety function has arisen in a period during which the gas is available, safety processing for cutting off a gas supply can be performed.

The present invention is directed toward the gas meter further comprising a determination unit that determines, from information read by the information reading unit, whether or not the storage unit is normal, wherein the control unit makes the program read by the information reading unit valid and brings the program into operating state when the storage unit is determined to be normal from a determination result from the determination unit.

As a result, unauthorized use of the storage unit can be prevented.

The present invention is also directed toward the gas meter, wherein the storage unit is a data-rewritable IC card.

As a result, the storage unit can repeatedly be used again and again.

A gas meter system of the present invention has the gas meter defined in any one of the gas meters; and the storage unit.

As a result, the quantity of available gas can be stored in a portable storage unit. An optimum safety function is selected from among a plurality of safety functions according to a use environment, and a program corresponding to the selected safety function can be stored. The quantity of available gas and the safety function program, which are stored in the storage unit, are read by a gas meter main unit, whereby the quantity of available gas and the safety function are set. It becomes possible to use a gas up to a predetermined remaining quantity. When an event fulfilling operating conditions for safety function has arisen in a period during which the gas is available, safety processing for cutting off a gas supply can be performed.

A gas meter of the present invention has: flow measurement unit that measures a quantity of gas flowing through a gas passageway; a flow computing unit that computes, from a flow value measured by the flow measurement unit, predetermined flow data; an insertion unit into which there is inserted a portable storage unit that stores a quantity of available gas commensurate with a bill paid by a user and that stores information for selecting as safety function pertaining to usage of a gas at least one safety function among a plurality of safety functions for which the user has made a selection and payment; an information reading unit that reads information stored in the storage unit inserted in the insertion unit; a remaining available quantity count unit that subtracts a flow determined by the flow computing unit from the quantity of available gas read by the information reading unit, thereby determining a remaining available quantity; a safety function storage unit that stores a safety function program for respectively performing the plurality of safety functions; a safety function selection unit that selects a safety function program, which corresponds to the information read by the information reading unit, from a plurality of safety function programs stored in the safety function storage unit; a control unit that performs predetermined processing operation when the remaining available quantity determined by the remaining available quantity count unit has reached a predetermined remaining quantity and when an event fulfilling operating conditions for the safety function program selected by the safety function selection unit has arisen.

As a result, the quantity of available gas can be stored in a portable storage unit. An optimum safety function is selected from among a plurality of safety functions according to a use environment, and information used for selecting an optimum safety function according to a use environment can be stored. The gas meter main unit reads the quantity of available gas and information for selecting safety function stored in the storage unit; sets the quantity of available gas; selects a corresponding safety function program from a plurality of safety function programs stored in the gas meter main unit according to the information, and the thus-selected program is set. As a result, it becomes possible to use a gas up to a predetermined remaining quantity. When an event fulfilling operating conditions for the set safety function has arisen, safety processing for cutting off a gas supply can be performed.

The gas meter of the present invention further has a determination unit that determines, from information read by the information reading unit, whether or not the storage unit is normal, wherein the control unit makes the safety function program read by the safety function selection unit valid and brings the program into operating state when the storage unit is determined to be normal from a determination result from the determination unit.

As a result, unauthorized use of a storage unit can be prevented.

The present invention is directed toward the gas meter, wherein the storage unit is a data-rewritable IC card.

As a result, repeated use of the storage unit becomes possible, which can in turn contribute to resource savings.

A gas meter system of the present invention has any one of the aforementioned gas meters; and the storage unit.

As a result, the quantity of available gas can be stored in a portable storage unit. An optimum safety function is selected from among a plurality of safety functions according to a use environment, and information used for selecting an optimum safety function according to a use environment can be stored. The gas meter main unit reads the quantity of available gas and the information for selecting safety function stored in the storage unit; sets the quantity of available gas; selects a corresponding safety function program from a plurality of safety function programs stored in the gas meter main unit according to the information, and the thus-selected program is set. As a result, it becomes possible to use a gas up to a predetermined remaining quantity. When an event fulfilling operating conditions for the set safety function has arisen, safety processing for cutting off a gas supply can be performed.

A gas meter system of the present invention has: a portable storage device that enables writing and reading of data; an information writing device that stores information about a safety function, which has been selected by a user terminal by way of an electric communication line from a plurality of safety functions serving as safety functions pertaining to usage of a gas, and that writes the stored information into the storage device pursuant to a request for writing information into the storage unit; and a gas meter that has a safety function program for respectively performing the plurality of safety functions, that reads the information written in the storage device, to thus select a safety function program corresponding to the read information, and that performs predetermined processing operation when an event fulfilling operation conditions for the selected safety function program has arisen.

As a result, it is possible to select an optimum safety function from among a plurality of safety functions according to a user environment and by means of a user terminal. Further, safety selection information corresponding to the purchased safety function is written into the storage device by means of an information writing apparatus, whereby use of the gas meter becomes possible. A safety function program corresponding to safety selection information is set as a result of the storage device being attached to the gas meter. When an event fulfilling operating conditions for the safety function has arisen, safety processing for cutting off a gas supply, and the like, is performed.

Further, the present invention is directed toward the gas meter system, and a data-rewritable IC card is provided as the storage device.
As a result, repeated use of the storage device becomes possible, which in turn contributes to resource savings.

### Advantage of the Invention

According to the present invention, there can be provided a gas meter and a gas meter system that enable setting of safety function according to a use environment, and the like, and enhancement of the safety function.

### Brief Description of the Drawings

[Fig. 1] It is a block diagram showing the configuration of a gas meter and a gas meter system of a first embodiment of the present invention.
[Fig. 2] It is a flowchart showing processing procedures employed at the time of operation of the gas meter and the gas meter system of the first embodiment of the present invention.
[Fig. 3] It is a block diagram showing the configuration of a gas meter and a gas meter system of a second embodiment of the present invention.
[Fig. 4] It is a flowchart showing processing procedures employed at the time of operation of the gas meter and the gas meter system of the second embodiment of the present invention.
[Fig. 5] It is a block diagram showing the general configuration of a gas meter system of a third embodiment of the present invention.
[Fig. 6] It is a block diagram showing the general configuration of a card charger of the gas meter system of the third embodiment of the present invention.
[Fig. 7] It is a flowchart showing processing procedures employed at the time of operation of the gas meter system of the third embodiment of the present invention.
[Fig. 8] It is a sequence diagram for describing charging procedures of an IC card for the gas meter system of the third embodiment of the present invention.

### Descriptions of the Reference Numerals and Symbols

100 GAS METER
102 PASSAGEWAY
104 CUTOFF VALVE
106 FLOW MEASUREMENT UNIT
108 PRESSURE SENSOR
110 FLOW COMPUTING UNIT
112 MONITORING UNIT
114 CONTROL UNIT
116 FUNCTION SETTING UNIT
118 IC CARD
120 IC CARD INSERTION UNIT
122 IC CARD READING UNIT
124 REMAINING AVAILABLE QUANTITY COUNT UNIT
126 IC CARD DETERMINATION UNIT
128 SAFETY FUNCTION DETECTION UNIT
130 SAFETY FUNCTION STORAGE UNIT
132 SEISMOSCOPE
134 ALARM
136 SAFETY FUNCTION SELECTION UNIT
138 SAFETY FUNCTION STORAGE UNIT
140 CARD VENDING MACHINE
150 NETWORK
151, 152, 153 GAS APPLIANCE
160 TERMINAL
170 SERVER
180 CARD CHARGER

### Best Modes for Implementing the Invention

### (First Embodiment)

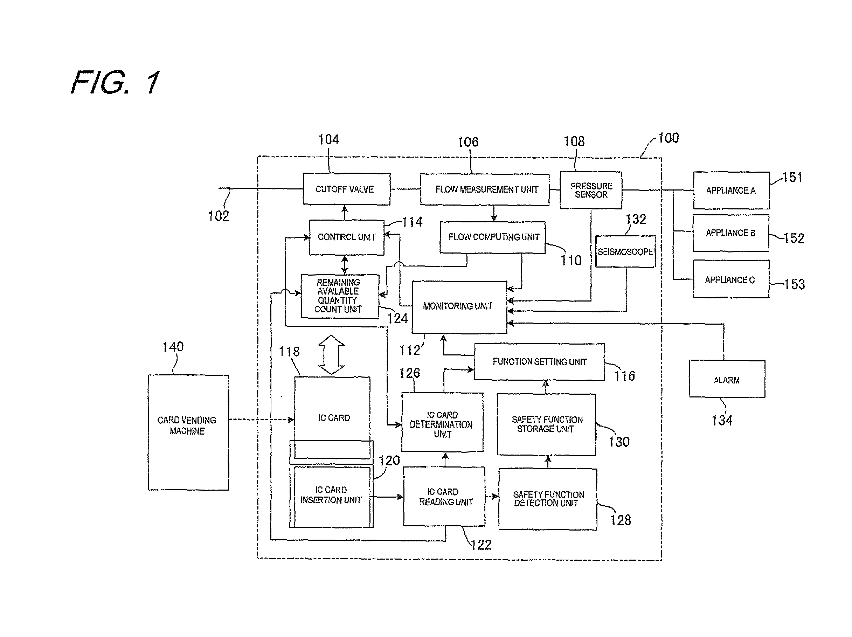

Fig. 1 is a block diagram showing the configuration of a gas meter and a gas meter system of a first embodiment of the present invention. The gas meter system of the present embodiment is made up of a gas meter 100 serving as a flow measurement apparatus and an IC card 118 used with the gas meter 100. A card vending machine 140 writes the quantity of available gas corresponding to a prepayment and various pieces of information in the IC card 118. The gas meter 100 is placed outside or inside a building in which gas appliances are to be provided. The card vending machine 140 is installed in a gas company, a propane gas supplier, an affiliate thereof, a convenience store, and the like.

The gas meter 100 is connected to a passageway 102 by way of which gas is supplied; and a cutoff valve 104, a flow measurement unit 106, and a pressure sensor 108 are provided in the passageway 102. The gas meter 100 has a flow computing unit 110, a monitoring unit 112, a control unit 114, a function setting unit 116, a storage medium 118, an IC card insertion unit 120, an IC card reading unit 122, a remaining available quantity count unit 124, a safety function detection unit 128, a safety function storage unit 130, and a seismoscope 132. Functions of the flow computing unit 110, the monitoring unit 112, the control unit 114, the function setting unit 116, the remaining available quantity count unit 124, an IC card determination unit 126, the safety function detection unit 128, and the safety function storage unit 130 are implemented by an arithmetic processing unit made up of a processor, such as a microcomputer, and memory.

One or more various gas appliances A 151, B 152, and C 153, such as a gas cooker, a fan heater, and a floor heater, are connected to downstream points on a passageway with respect to the gas meter 100. An alarm 134 that issues an alarm about an anomalous state upon detection of an escape of a gas, carbon monoxide (CO), and the like, is disposed in the vicinity of locations where the gas appliances 151 to 153 are installed; and is mutually communicable with the gas meter 100 by means of wireless or wired communication.

The flow measurement unit 106 measures the quantity of gas flowing through the passageway 102 and is made up of an ultrasonic flowmeter. Although an example configuration using an ultrasonic flowmeter as the flow measurement unit 106 is described in connection with the present embodiment, other various flow measurement units, such as a membrane flowmeter, may also be employed, so long as the flowmeter can measure the quantity of gas. In the flow measurement unit 106, an ultrasonic transmitter and an ultrasonic receiver, which are disposed respectively at upstream and downstream positions in the passage 102, alternately exchange ultrasonic waves at a given time interval (e.g., two seconds, and the like), thereby determining a difference between a propagation time of ultrasonic waves acquired in a forward flow direction of a fluid and a propagation time of ultrasonic waves acquired in a reverse flow direction of the fluid. A flow speed of and the quantity of a fluid to be measured are measured on the basis of the propagation time difference.

The flow computing unit 110 computes the quantity of gas consumed, a flow pattern corresponding to a time for measuring the quantity, and the like, by use of a measured flow value output from the flow measurement unit 106; and stores flow data pertaining to the quantity and the time, such as an integrated flow and a flow pattern, in an internally/externally-installed storage unit (not shown). The thus-computed flow data are output to the monitoring unit 112 and the remaining available quantity count unit 124.

The pressure sensor 108 detects the pressure of a gas in the passageway 102 and outputs a pressure detection signal to the monitoring unit 112. The seismoscope 132 detects a tremor of an earthquake; and outputs a seismic signal to the monitoring unit 112 upon detection of a tremor of seismic intensity of a predetermined level or more. The alarm 134 detects an escape of a gas from the passageway 102 or the gas appliances 151 to 153 and CO originated from the gas appliances 151 to 153. When detecting the escape of a gas or CO, the alarm outputs an anomaly detection signal to the monitoring unit 112.

Pursuant to preset safety functions, the monitoring unit 112 monitors malfunction that will arise during usage of a gas. When operating conditions for the safety functions are fulfilled in accordance with the flow data from the flow computing unit 110, the pressure detection signal from the pressure sensor 108, the seismic signal from the seismoscope 132, the anomaly detection signal from the alarm 134, and the like, the monitoring unit 112 detects malfunction during usage of a gas and outputs a safety signal to the control unit 114. The function setting unit 116, which will be described later, sets safety function of the monitoring unit 112. The monitoring unit 112 performs monitoring operation in connection with the safety function set by the function setting unit 116.

In relation to the safety function, there is available a function of performing processing for safety purposes by detecting various malfunction events attributable to an excess flow, an excess in operating time, detection of leakage, anomalous pressure, detection of pulsation, operation of a seismoscope, operation of an alarm, and the like. There are the following functions in relation to; for instance, detection of malfunction.
(1) Excess in total maximum flow ... arising when the total flow achieved in a given period exceeds a reference flow.
(2) Excess in individual maximum flow ... arising when a difference between a current flow and a previous flow is equal to or greater than a predetermined value every time a flow is measured.
(3) Excess of a duration of safety ... arising when an appliance is continually used in excess of an allowable continual operating time specified for each flow.
(4) Detection of pressure rise ... arising when an increase in a pressure level to a predetermined level or more is detected.
(5) Detection of pressure drop ... arising when a decrease in pressure level to a predetermined level or below is detected.
(6) Detection of operation of a seismoscope ... arising when activation of a seismoscope resultant from a tremor of an earthquake, or the like, is detected.
(7) Detection of minute leakage ... arising when a predetermined quantity of a minute leakage of flow has been detected for a predetermined number of days.
(8) Detection of pulsation ... arising when a flow fluctuation or a pressure fluctuation of predetermined level or more is detected.
(9) Detection of operation of an alarm ... arising when activation of various alarms is detected.

If a safety function is not particularly selected when a user purchases or re-charges the IC card 118, a safety function of an excess in total maximum flow, for instance, is set as a default safety mode. When the safety function is selected, the thus-selected safety function is set. As mentioned previously, an alarm operation and a cutoff operation are provided as processing operations performed when malfunction is detected by the safety function. When an anomaly is detected by the selected safety function, cutoff operation is performed. When an anomaly is detected by an unselected safety function, alarm operation is performed.

The IC card 118 has an unillustrated storage region and a control region that reads/writes data from and in the storage region; and is also called a prepaid card. The storage region of the IC card 118 has an area for writing information about the quantity of available gas and another area for writing various pieces of information including a program for implementing the safety function (hereinafter called a "safety function program"). The foregoing card vending machine 140 writes the information about the quantity of available gas and various pieces of information into the IC card 118.

When a gas bill and a safety function bill are separately paid, the quantity of available gas remains unchanged regard less of the number of selected safety functions. However, when the gas bill and the safety function bill are paid in one lump sum, the quantity of available gas changes according to the number of selected safety functions. Specifically, the larger the number of selected safety functions, the smaller the quantity of available gas. Conversely, the smaller the number of selected safety functions, the greater the quantity of available gas. The safety function is an optional function. The user has an option to or not to purchase a safety function. Even when the safety function is not purchased, a safety function pertaining to an excess in total maximum flow, for instance, is selected as a default safety mode. In the present embodiment, the safety function pertaining to an excess in total maximum flow, for instance, is assumed to be selected as a default safety mode.

The IC card insertion unit 120 is an area of the gas meter 100 that accepts the IC card 118. When using a gas, the user inserts the purchased IC card 118 into the IC card insertion unit 120. When the IC card 118 is inserted into the IC card insertion unit 120, the IC card reading unit 122 reads information from the IC card 118. When the thus-read information is information about the quantity of available gas, the information is temporarily retained in the IC card reading unit 122. Next, when the IC card determination unit 126, which will be described later, determines that the IC card 118 is normal, the information about the quantity of available gas is sent to the control unit 114 by way of the IC card determination unit 126. The control unit 114 adds the information about the quantity of available gas to the information about a remaining available quantity from the remaining available quantity count unit 124 and stores a result of addition in the remaining available quantity count unit 124. Meanwhile, when the information read by the IC card reading unit 122 is information other than the information about the quantity of available gas, the thus-read information is output to the safety function detection unit 128 and the IC card determination unit 126. The remaining available quantity count unit 124 subtracts the flow computed by the flow computing unit 110 from a current remaining available quantity; decrements the remaining available quantity; and consecutively outputs the remaining available quantity to the control unit 114. The control unit 114 determines a remaining available quantity from the remaining available quantity count unit 124 and controls the cutoff valve 104 at a point in time when a predetermined quantity is achieved, thereby cutting off a gas supply.

The safety function detection unit 128 performs detection as to whether or not a safety function program is included in the information read by the IC card reading unit 122. When the safety function program is present, the program is stored in the safety function storage unit 130. The IC card determination unit 126 determines, from the information read from the IC card reading unit 122, whether or not the IC card 118 is normal. When determined that the IC card 118 is normal, the IC card determination unit outputs a valid signal to the function setting unit 116. When determined that the IC card 118 is not normal, the IC card determination unit outputs an invalid signal to the function setting unit 116. The IC card determination unit 126 outputs a result of determination of the IC card 118 to the control unit 114.

When the IC card 118 is determined to be normal from the determination result from the IC card determination unit 126, the control unit 114 determines that the safety function program is valid and brings the program into an operating state. When an event meeting working conditions for the safety function has arisen, processing compliant with safety function program is performed. In contrast, when the IC card 118 is not normal, the safety function program is determined to be invalid and remains inoperative.

When the valid signal is output from the IC card determination unit 126, the function setting unit 116 outputs the safety function program stored in the safety function storage unit 130 to the monitoring unit 112. Pursuant to the safety function program from the function setting unit 116, the monitoring unit 112 monitors the flow data pertaining to the flow computing unit 110 and anomaly detection signals from various sensors. When occurrence of an anomaly is determined, a safety signal is output to the control unit 114, thereby activating the cutoff valve 104. In accordance with the safety signal from the monitoring unit 112, the control unit 114 cuts off a gas supply. When a gas supply is cut off, the cutoff valve 104 is activated, to thus cut off the passageway 102. When detected an anomaly that cannot be managed by the safety function program from the function setting unit 116, the monitoring unit 112 performs alarming operation. The alarming operation means sounding of an unillustrated beeper, blinking of a light emitting element, and the like.

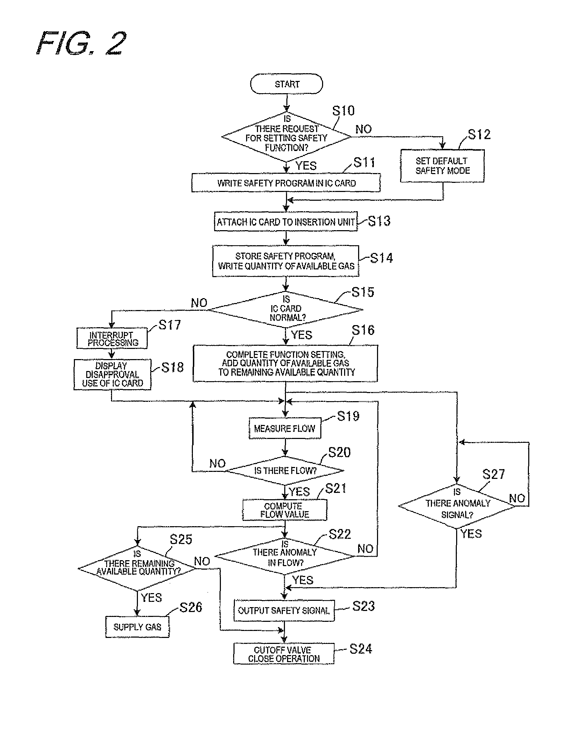

Operation of the gas meter and the gas meter system of the embodiment will now be described in detail. Fig. 2 is a flowchart showing processing procedures employed at the time of operation of the gas meter and the gas meter system of the embodiment of the present invention.

First, the card vending machine 140 determines whether or not there is a requirement for setting a safety function at the time of purchase of the IC card 118 (step S10). In this case, when the user performs operation for purchasing a safety function, a safety function setting request arises. When there is a safety function setting request, a safety function program corresponding to the safety function purchased by the user is written into the IC card 118 (step S11). When there is not any safety function setting request, a default safety mode (e.g., only a safety mode for an excess in total maximum flow) is set (step S12).

After the information has been written into the IC card 118, the user inserts the IC card 118 into the IC card insertion unit 120 (step S13). Upon detection of insertion of the IC card 118 into the IC card insertion unit 120, the IC card reading unit 122 collectively reads all of pieces of information written in the IC card 118. After all of the pieces of information have been read, the safety function program is stored in the safety function storage unit 130. The quantity of available gas commensurate with a charged payment is written into the IC card 118 (step S14).

Next, a determination is made, from the information read from the IC card 118, as to whether or not the IC card 118 is normal (step S15). When the IC card is normal, function setting is completed. Specifically, the safety function program read from the IC card 118 is output to the monitoring unit 112. Function setting is completed as a result of setting of the safety function, and there is performed processing for adding the quantity of available gas commensurate with the payment charged in the IC card 118 to the remaining available quantity (step S16). Meanwhile, when the IC card 118 is not normal, processing is interrupted (step S17). A message indicating that the IC card 118 cannot be used (is anomalous) is displayed on an unillustrated display unit (step S18). Subsequently, processing proceeds to step S19.

When processing proceeds to the next step while the IC card 118 is determined to be normal, the flow measurement unit 106 measures a gas flow (step S19). Next, a determination is made as to whether or not there is a flow (step S20). When there is a flow, the flow computing unit 110 computes a flow value (step S21). Further, when the flow is determined not to be present in step S20, processing returns to flow measurement pertaining to step S19, where similar processing is iterated. After calculation of the flow value, the monitoring unit 112 determines whether or not the flow has an anomaly, such as an excessive flow (step S22). When an anomaly is determined to be in the flow in step S22, processing proceeds to the next processing. When an anomaly is determined not to be in the flow, processing returns to flow measurement pertaining to step S19, where similar processing is iterated.

The monitoring unit 112 determines whether or not an anomaly signal, such as the pressure detection signal from the pressure sensor 108, the seismic signal from the seismoscope 132, and an anomaly detection signal from the alarm 134, is output (step S27). In step S27, when the anomaly signal is output, processing proceeds to the next step. When the anomaly signal is not output, processing pertaining to step S19 is iterated.

When an anomaly is in the flow or when an anomaly signal is output, the monitoring unit 112 determines occurrence of malfunction and outputs a safety signal to the control unit 114 (step S23). When the safety signal is output, the control unit 114 activates the cutoff valve 104, to thus close the passageway 102 and cut off the gas supply (step S24).

Meanwhile, the control unit 114 determines from a count value of the remaining available quantity count unit 124 whether or not there is a remaining available quantity (step S25). When there is a remaining available quantity, the gas supply is made continual (step S26). When there is no remaining available quantity, the cutoff valve 104 is activated, to thus close the passageway 102 and cut off the gas supply (step S24).

According to the present embodiment, the quantity of available gas can be stored in the IC card 118. Further, an optimum function is selected from a plurality of safety functions according to a use environment, and a program corresponding to the selected safety function can be stored. The quantity of available gas and the safety function are set by insertion of the IC card 118, which stores the quantity of available gas and the safety function program, into the IC card insertion unit 120 of the gas meter 100. The gas can thereby be used until a predetermined remaining quantity is achieved. When an event fulfilling operating conditions for the safety function has occurred in a period during which the gas is available, safety processing for cutting off a gas supply can be carried out.

A safety function can be selected from among a plurality of safety functions in accordance with a district where a gas meter is used, a location where a gas meter is installed, an operating state, the quantity of flow consumed, and the like, and the thus-selected safety function can be set. Updating of the safety function in compliance with a version upgrade or addition of new safety function is also possible.

Even when substantially all of the safety functions are set on the gas meter, when the risk of occurrence of an accident attributable to a gas supply is considerably low, and when safety is assured, an accident happens on rare occasion. In such a case, upgrading of the gas meter can also be made possible while advanced safety function for preventing occurrence of a rare accident is taken as an option.

Depending on a district where the gas meter is used, an area where no safety functions are available is also conceived. In such a district, a desire for beefing up safety functions may arise in accordance with future development of infrastructures, an emotional change in the user who places emphasis on safety, and changes in measures of the government, and the like. It is also possible to enable, as an initial response to the desire, selective setting of a safety function for preventing occurrence of an accident, which would otherwise be caused by a gas supply, and enhance safety of the gas supply system by charging a safety function and attempting expansion of the functions of the existing gas meter.

The IC card determination unit 126 determines whether or not the IC card 118 is normal. When the IC card is normal, the safety function is made valid and operative. In contrast, when the IC card is not normal, the safety function is made invalid and inoperative. Hence, unauthorized use of the IC card can be prevented. Moreover, employment of an IC card enables repeated use, which in turn contributes to resource savings.

When the remaining available quantity decreases faster than a predetermined rate in the middle of a decrease in remaining available quantity being monitored by the remaining available quantity count unit 124, a large gas escape has arisen in a pipe, and the like. Alternatively, anomalous usage of a gas exceeding gas supply capability may be determined to have arisen, predetermined processing operation may also be performed. The function may also be set in a safety function program or implemented as an additional function of the IC card 118.

### (Second Embodiment)

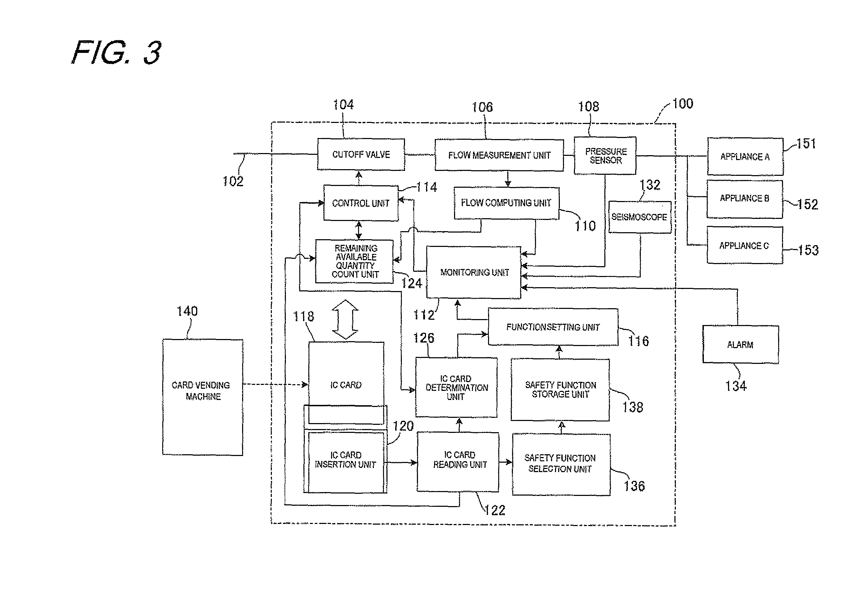

Fig. 3 is a block diagram showing the configuration of a gas meter and a gas meter system of a second embodiment of the present invention. The gas meter system of the present embodiment is made up of a gas meter 100 serving as a flow measurement apparatus and an IC card 118 used with the gas meter 100. A card vending machine 140 writes in the IC card 118 the quantity of available gas corresponding to a prepayment and information used for selecting a safety function pertaining to the use of a gas (hereinafter called "safety selection information"). The gas meter 100 is placed outside or inside a building in which gas appliances are to be provided. The card vending machine 140 is installed in a gas company, a propane gas supplier, an affiliate thereof, a convenience store, and the like.

The gas meter 100 is connected to a passageway 102 by way of which gas is supplied; and a cutoff valve 104, a flow measurement unit 106, and a pressure sensor 108 are provided in the passageway 102. The gas meter 100 has a flow computing unit 110, a monitoring unit 112, a control unit 114, a function setting unit 116, a storage medium 118, an IC card insertion unit 120, an IC card reading unit 122, a remaining available quantity count unit 124, a safety function selection unit 136, a safety function storage unit 138, and a seismoscope 132. Functions of the flow computing unit 110, the monitoring unit 112, the control unit 114, the function setting unit 116, the remaining available quantity count unit 124, an IC card determination unit 126, the safety function selection unit 136, and the safety function storage unit 138 are implemented by an arithmetic processing unit made up of a processor, such as a microcomputer, and memory.

One or more various gas appliances A 151, B 152, and C 153, such as a gas cooker, a fan heater, and a floor heater, are connected to downstream points on a passageway with respect to the gas meter 100. An alarm 134 that issues an alarm about an anomalous state upon detection of an escape of a gas, carbon monoxide (CO), and the like, is disposed in the vicinity of locations where the gas appliances 151 to 153 are installed; and is mutually communicable with the gas meter 100 by means of wireless or wired communication.

The flow measurement unit 106 measures the quantity of gas flowing through the passageway 102 and is made up of an ultrasonic flowmeter. Although an example configuration using an ultrasonic flowmeter as the flow measurement unit 106 is described in connection with the present embodiment, other various flow measurement units, such as a membrane flowmeter, may also be employed, so long as the flowmeter can measure the quantity of gas. In the flow measurement unit 106, an ultrasonic transmitter and an ultrasonic receiver, which are disposed respectively at upstream and downstream positions in the passage 102, alternately exchange ultrasonic waves at a given time interval (e.g., two seconds, and the like), thereby determining a difference between a propagation time of ultrasonic waves acquired in a forward flow direction of a fluid and a propagation time of ultrasonic waves acquired in a reverse flow direction of the fluid. A flow speed of and the quantity of a fluid to be measured are measured on the basis of the propagation time difference.

The flow computing unit 110 computes the quantity of gas consumed, a flow pattern corresponding to a time for measuring the quantity, and the like, by use of a measured flow value output from the flow measurement unit 106; and stores flow data pertaining to the quantity and the time, such as an integrated flow and a flow pattern, in an internally/externally-installed storage unit (not shown). The thus-computed flow data are output to the monitoring unit 112 and the remaining available quantity count unit 124.

The pressure sensor 108 detects the pressure of a gas in the passageway 102 and outputs a pressure detection signal to the monitoring unit 112. The seismoscope 132 detects a tremor of an earthquake; and outputs a seismic signal to the monitoring unit 112 upon detection of a tremor of seismic intensity of a predetermined level or more. The alarm 134 detects an escape of a gas from the passageway 102 or the gas appliances 151 to 153 and CO originated from the gas appliances 151 to 153. When detecting the escape of a gas or CO, the alarm outputs an anomaly detection signal to the monitoring unit 112.

Pursuant to preset safety functions, the monitoring unit 112 monitors malfunction that will arise during usage of a gas. When operating conditions for the safety functions are fulfilled in accordance with the flow data from the flow computing unit 110, the pressure detection signal from the pressure sensor 108, the seismic signal from the seismoscope 132, the anomaly detection signal from the alarm 134, and the like, the monitoring unit 112 detects malfunction during usage of a gas and outputs a safety signal to the control unit 114. The function setting unit 116, which will be described later, sets safety function of the monitoring unit 112. The monitoring unit 112 performs monitoring operation in connection with the safety function program set by the function setting unit 116.

In relation to the safety function, there is available a function of performing processing for safety purposes by detecting various malfunction events attributable to an excess flow, an excess in operating time, detection of leakage, anomalous pressure, detection of pulsation, operation of a seismoscope, operation of an alarm, and the like. There are the following functions in relation to; for instance, detection of malfunction.
(1) Excess in total maximum flow ... arising when the total flow achieved in a given period exceeds a reference flow.
(2) Excess in individual maximum flow ... arising when a difference between a current flow and a previous flow is equal to or greater than a predetermined value every time a flow is measured.
(3) Excess of a duration of safety ... arising when an appliance is continually used in excess of an allowable continual operating time specified for each flow.
(4) Detection of pressure rise ... arising when detection of an increase in pressure level to a predetermined level or more is detected.
(5) Detection of pressure drop ... arising when a decrease in pressure level to a predetermined level or below is detected.
(6) Detection of operation of a seismoscope ... arising when activation of a seismoscope resultant from a tremor of an earthquake, or the like, is detected.
(7) Detection of minute leakage ... arising when a predetermined quantity of a minute leakage of flow has been detected for a predetermined number of days.
(8) Detection of pulsation ... arising when a flow fluctuation or a pressure fluctuation of predetermined level or more is detected.
(9) Detection of operation of an alarm ... arising when activation of various alarms is detected.

A safety function storage unit 138 stores a safety function program for implementing the safety functions (1) to (9). A selected safety function is set as a result of selection of a safety function. As mentioned previously, an alarm operation and a cutoff operation are provided as processing operations performed when malfunction is detected by the safety function. When an anomaly is detected by the selected safety function, cutoff operation is performed. When an anomaly is detected by an unselected safety function, alarm operation is performed.

The IC card 118 has an unillustrated storage region and a control region that reads/writes data from and in the storage region; and is also called a prepaid card. The storage region of the IC card 118 has a first area for writing information about the quantity of available gas and a second area for writing various pieces of information including safety selection information for selecting a safety function. The foregoing card vending machine 140 writes the quantity of available gas and various pieces of information into the IC card 118. Specifically, as a result of the user performing operation for specifying a desired quantity of gas through use of the card vending machine 140 and operation for selecting a safety function, the quantity of available gas is written into the first area of the IC card 118, and safety selection information for selecting a safety function is written into the second area. In this case, since there are a plurality of types of safety function, the user selects an optimum safety function according to his/her use environment, and safety selection information that selects the thus-selected safety function is written into the second area of the IC card 118.

When a gas bill and a safety function bill are separately paid at the time of purchase of a gas and safety function, the quantity of available gas remains unchanged regardless of the number of selected safety functions. However, when the gas bill and the safety function bill are paid in one lump sum, the quantity of available gas changes according to the number of selected safety functions. Specifically, the larger the number of selected safety functions, the smaller the quantity of available gas. Conversely, the smaller the number of selected safety functions, the greater the quantity of available gas. The safety function is an optional function. The user has an option to or not to purchase a safety function. Even when the safety function is not purchased, a safety function pertaining to an excess in total maximum flow, for instance, is selected as a default safety mode. Safety selection information for selecting the safety function is written into the IC card 118. In the present embodiment, the safety function pertaining to an excess in total maximum flow, for instance, is assumed to be selected as a default safety mode.

The IC card insertion unit 120 is an area of the gas meter 100 that accepts the IC card 118. When using a gas, the user inserts the purchased IC card 118 into the IC card insertion unit 120. When the IC card 118 is inserted into the IC card insertion unit 120, the IC card reading unit 122 reads information from the IC card 118. At this time, all of the pieces of information stored in the IC card 118 are collectively read. As a result of the IC card reading unit 122 reading all of the pieces of information stored in the IC card 118, memory of the IC card 118 becomes empty.

When the thus-read information is information about the quantity of available gas, the information is temporarily retained in the IC card reading unit 122. Next, when the IC card determination unit 126, which will be described later, determines that the IC card 118 is normal, the information about the quantity of available gas is sent to the control unit 114 by way of the IC card determination unit 126. The control unit 114 adds the information about the quantity of available gas to the information about a remaining available quantity from the remaining available quantity count unit 124 and stores a result of addition in the remaining available quantity count unit 124. Meanwhile, when the information read by the IC card reading unit 122 is information other than the information about the quantity of available gas, the thus-read information is output to the safety function selection unit 136 and the IC card determination unit 126. The remaining available quantity count unit 124 subtracts the flow computed by the flow computing unit 110 from a current remaining available quantity; decrements the remaining available quantity; and outputs the remaining available quantity to the control unit 114. The control unit 114 determines a remaining available quantity from the remaining available quantity count unit 124 and controls the cutoff valve 104 at a point in time when a predetermined quantity is achieved, thereby cutting off a gas supply.

The safety function selection unit 136 performs detection as to whether or not safety selection information is included in the information read by the IC card reading unit 122. When the safety selection information is present, a corresponding safety function program is selected from a plurality of safety function programs stored in the safety function storage unit 138. The thus-selected safety function program is output to the function setting unit 116. In this case, when a plurality of pieces of safety selection information are included, corresponding safety function programs are respectively selected, and the thus-selected programs are output to the function setting unit 116.

The IC card determination unit 126 determines, from the information read from the IC card reading unit 122, whether or not the IC card 118 is normal. When determined that the IC card 118 is normal, the IC card determination unit outputs a valid signal to the function setting unit 116. When determined that the IC card 118 is not normal, the IC card determination unit 126 outputs an invalid signal to the function setting unit 116. The IC card determination unit 126 outputs a result of determination of the IC card 118 to the control unit 114.

When the valid signal is output from the IC card determination unit 126, the function setting unit 116 outputs the safety function program selected by the safety function selection unit 136 to the monitoring unit 112. Pursuant to the safety function program from the function setting unit 116, the monitoring unit 112 monitors the flow data pertaining to the flow computing unit 110 and anomaly detection signals from various sensors. When occurrence of an anomaly is determined, a safety signal is output to the control unit 114, thereby activating the cutoff valve 104. When detected an anomaly that cannot be managed by the safety function program from the function setting unit 116, the monitoring unit 112 performs alarming operation. The alarming operation means sounding of an unillustrated beeper, blinking of a light emitting element, and the like.

When the IC card 118 is determined to be normal from the determination result from the IC card determination unit 126, the control unit 114 determines that the safety function program is valid and brings the program into an operating state. When an event meeting working conditions for the safety function has arisen, processing compliant with safety function program is performed. In contrast, when the IC card 118 is not normal, the safety function program is determined to be invalid and remains inoperative. In a case where the IC card 118 is normal and in an operating state, the control unit 114 cuts off a gas supply when a safety signal is output from the monitoring unit 112. When the gas supply is cut off, the cutoff valve 104 is activated, to thus cut off the passageway 102.

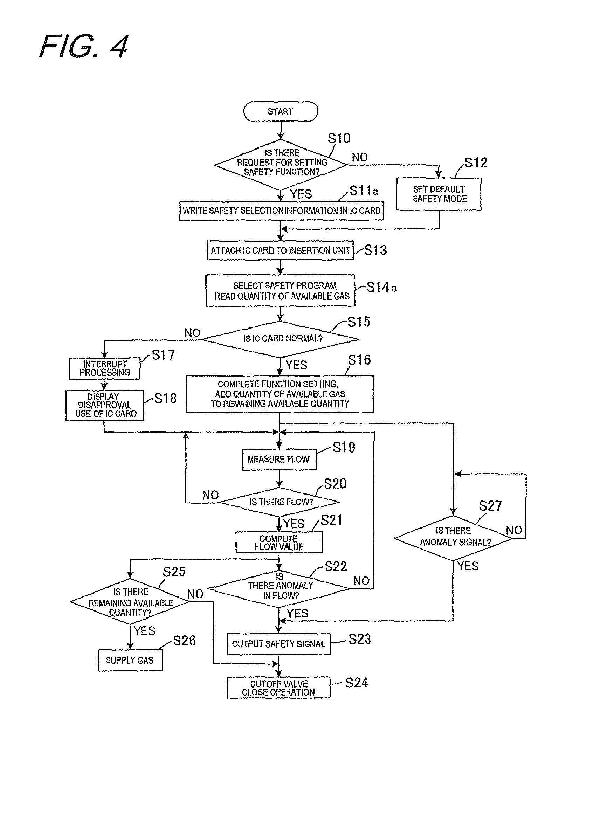

Operation of the gas meter and the gas meter system of the embodiment will now be described in detail. Fig. 4 is a flowchart showing processing procedures employed at the time of operation of the gas meter and the gas meter system of the second embodiment of the present invention.

First, the card vending machine 140 determines whether or not there is a request for setting a safety function in addition to the quantity of available gas at the time of purchase of the IC card 118 (step S10). In this case, when the user performs operation for purchasing a safety function, a safety function setting request arises. When a safety function setting request has arisen, the card vending machine 140 writes into the IC card 118 safety selection information corresponding to the safety function purchased (selected) by the user (step S11a). When safety function setting request has not arisen, a default safety mode (e.g., only a safety mode for an excess in total maximum flow) is set (step S12). Specifically, the card vending machine 140 writes into the IC card 118 the safety selection information corresponding to the default safety mode.

After various pieces of information have been written into the IC card 118, the user inserts the IC card 118 into the IC card insertion unit 120 (step S13). Upon detection of insertion of the IC card 118 into the IC card insertion unit 120, the IC card reading unit 122 collectively reads all of pieces of information written in the IC card 118. After all of the pieces of information have been read, the safety function program corresponding to the safety selection information is selected from the safety function storage unit 138. The quantity of available gas commensurate with a charged payment charged in the IC card 118 is read (step S14a). The thus-selected safety function program is output to the function setting unit 116.

Next, the IC card determination unit 126 makes a determination, from the information read from the IC card 118, as to whether or not the IC card 118 is normal (step S15). When the IC card 118 is normal, a valid signal is output to the function setting unit 116. When the IC card 118 is determined not to be normal, an invalid signal is output to the function setting unit 116. The IC card determination unit 126 also outputs a result of determination of the IC card 118 to the control unit 114. When the IC card 118 is not normal, subsequent processing is interrupted (step S17). A message indicating that the IC card 118 cannot be used (is anomalous) is displayed on an unillustrated display unit (step S18). Subsequently, processing proceeds to step S19. Function setting is thus completed thus far, and there is performed processing for adding the quantity of available gas commensurate with the payment charged in the IC card 118 to the remaining available quantity (step S16).

When processing proceeds to the next step while the IC card 118 is determined to be normal, the flow measurement unit 106 measures a gas flow (step S19). Next, a determination is made as to whether or not there is a flow (step S20). When there is a flow, the flow computing unit 110 computes a flow value (step S21). Further, when the flow is determined not to be present in step S20, processing returns to flow measurement pertaining to step S19, where similar processing is iterated. After calculation of the flow value, the monitoring unit 112 determines whether or not the flow has an anomaly, such as an excessive flow (step S22). When an anomaly is determined to be in the flow in step S22, processing proceeds to the next processing. When an anomaly is determined not to be in the flow, processing returns to flow measurement pertaining to step S19, where similar processing is iterated.

The monitoring unit 112 determines whether or not an anomaly signal, such as the pressure detection signal from the pressure sensor 108, the seismic signal from the seismoscope 132, and an anomaly detection signal from the alarm 134, is output (step S27). In step S27, when the anomaly signal is output, processing proceeds to the next step. When the anomaly signal is not output, processing pertaining to step S19 is iterated.

When an anomaly is in the flow or when an anomaly signal is output, the monitoring unit 112 determines occurrence of malfunction and outputs a safety signal to the control unit 114 (step S23). When the safety signal is output, the control unit 114 causes the cutoff valve 104 to perform closing action, thereby close the passageway 102 and cutting off the gas supply (step S24).

Meanwhile, the control unit 114 determines from a count value of the remaining available quantity count unit 124 whether or not there is a remaining available quantity (step S25). When there is a remaining available quantity, the gas supply is made continual (step S26). When there is no remaining available quantity, the cutoff valve 104 is activated, to thus close the passageway 102 and cut off the gas supply (step S24).

According to the present embodiment, the quantity of available gas can be stored in the IC card 118. Further, an optimum function is selected from a plurality of safety functions according to a use environment, and a program corresponding to the selected safety function can be stored. The quantity of available gas is set by insertion of the IC card 118, which stores the quantity of available gas and the safety selection information for selecting safety function, into the IC card insertion unit 120 of the gas meter 100. A corresponding safety function program is read from the safety function storage unit 138, whereby safety function is set. The gas can thereby be used until a predetermined remaining quantity is achieved. When an event fulfilling operating conditions for the safety function has occurred in a period during which the gas is available, safety processing for cutting off a gas supply can be carried out.

A safety function can be selected from among a plurality of safety functions in accordance with a district where a gas meter is used, a location where a gas meter is installed, an operating state, the quantity of flow consumed, and the like, and the thus-selected safety function can be set. Updating of the safety function in compliance with a version upgrade or addition of new safety function is also possible.

Even when substantially all of the safety functions are set on the gas meter, when the risk of occurrence of an accident attributable to a gas supply is considerably low, and when safety is assured, an accident happens on rare occasion. In such a case, upgrading of the gas meter can also be made possible while advanced safety function for preventing occurrence of a rare accident is taken as an option.

Depending on a district where the gas meter is used, an area where no safety functions are available is also conceived. In such a district, a desire for beefing up safety functions may arise in accordance with future development of infrastructures, an emotional change in the user who places emphasis on safety, and changes in measures of the government, and the like. It is also possible to enable, as an initial response to the desire, selective setting of a safety function for preventing occurrence of an accident, which would otherwise be caused by a gas supply, and enhance safety of the gas supply system by charging a safety function and attempting expansion of the functions of the existing gas meter.

The IC card determination unit 126 determines whether or not the IC card 118 is normal. When the IC card is normal, the safety function is made valid and operative. In contrast, when the IC card is not normal, the safety function is made invalid and inoperative. Hence, unauthorized use of the IC card can be prevented. Moreover, employment of an IC card enables repeated use, which in turn contributes to resource savings.

When the remaining available quantity decreases faster than a predetermined rate in the middle of a decrease in remaining available quantity being monitored by the remaining available quantity count unit 124, a large gas escape has arisen in a pipe, and the like. Alternatively, anomalous usage of a gas exceeding gas supply capability may be determined to have arisen, and predetermined processing operation may also be performed. The function may also be set in a safety function program or implemented as an additional function of the IC card 118.

### (Third Embodiment)

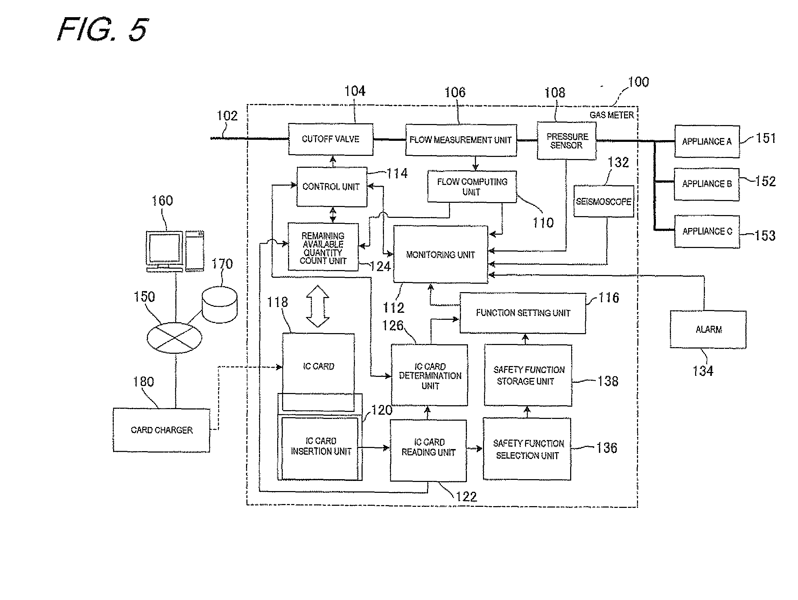

Fig. 5 is a block diagram showing the configuration of a gas meter system of a third embodiment of the present invention. The gas meter system of the present embodiment is made up of a gas meter 100 serving as a flow measurement apparatus, an IC card (a storage device) 118 used with the gas meter 100, a card charger (an information writing device) 180 that writes in the IC card 118 the quantity of available gas commensurate with a prepayment and information for selecting safety function pertaining to the use of a gas (hereinafter called "safety selection information"), and a server 170 that accepts purchase of a gas and safety function and performs billing operation with respect to a terminal 160 connected to a network 150, such as the Internet. The gas meter 100 is placed outside or inside a building in which gas appliances are to be provided. The card charger 180 is installed in a gas company, a propane gas supplier, an affiliate thereof, a convenience store, and the like. The server 170 is installed primarily in a communications company.

The gas meter 100 is connected to a passageway 102 by way of which gas is supplied; and a cutoff valve 104, a flow measurement unit 106, and a pressure sensor 108 are provided in the passageway 102. The gas meter 100 has a flow computing unit 110, a monitoring unit 112, a control unit 114, a function setting unit 116, an IC card 118, an IC card insertion unit 120, an IC card reading unit 122, a remaining available quantity count unit 124, a safety function selection unit 136, a safety function storage unit 138, and a seismoscope 132. Functions of the flow computing unit 110, the monitoring unit 112, the control unit 114, the function setting unit 116, the remaining available quantity count unit 124, an IC card determination unit 126, the safety function selection unit 136, and the safety function storage unit 138 are implemented by an arithmetic processing unit made up of a processor, such as a microcomputer, and memory.

One or more various gas appliances A 151, B 152, and C 153, such as a gas cooker, a fan heater, and a floor heater, are connected to downstream points on a passageway with respect to the gas meter 100. An alarm 134 that issues an alarm about an anomalous state upon detection of an escape of a gas, carbon monoxide (CO), and the like, is disposed in the vicinity of locations where the gas appliances 151 to 153 are installed; and is mutually communicable with the gas meter 100 by means of wireless or wired communication.

The flow measurement unit 106 measures the quantity of gas flowing through the passageway 102 and is made up of an ultrasonic flowmeter. Although an example configuration using an ultrasonic flowmeter as the flow measurement unit 106 is described in connection with the present embodiment, other various flow measurement units, such as a membrane flowmeter, may also be employed, so long as the flowmeter can measure the quantity of gas. In the flow measurement unit 106, an ultrasonic transmitter and an ultrasonic receiver, which are disposed respectively at upstream and downstream positions in the passage 102, alternately exchange ultrasonic waves at a given time interval (e.g., two seconds, and the like), thereby determining a difference between a propagation time of ultrasonic waves acquired in a forward flow direction of a fluid and a propagation time of ultrasonic waves acquired in a reverse flow direction of the fluid. A flow speed of and the quantity of a fluid to be measured are measured on the basis of the propagation time difference.

The flow computing unit 110 computes the quantity of gas consumed, a flow pattern corresponding to a time for measuring the quantity, and the like, by use of a measured flow value output from the flow measurement unit 106; and stores flow data pertaining to the quantity and the time, such as an integrated flow and a flow pattern, in an internally/externally-installed storage unit (not shown). The thus-computed flow data are output to the monitoring unit 112 and the remaining available quantity count unit 124.

The pressure sensor 108 detects the pressure of a gas in the passageway 102 and outputs a pressure detection signal to the monitoring unit 112. The seismoscope 132 detects a tremor of an earthquake; and outputs a seismic signal to the monitoring unit 112 upon detection of a tremor of seismic intensity of a predetermined level or more. The alarm 134 detects an escape of a gas from the passageway 102 or the gas appliances 151 to 153 and CO originated from the gas appliances 151 to 153. When detecting the escape of a gas or CO, the alarm outputs an anomaly detection signal to the monitoring unit 112.

Pursuant to preset safety functions, the monitoring unit 112 monitors malfunction that will arise during usage of a gas. When operating conditions for the safety functions are fulfilled in accordance with the flow data from the flow computing unit 110, the pressure detection signal from the pressure sensor 108, the seismic signal from the seismoscope 132, the anomaly detection signal from the alarm 134, and the like, the monitoring unit 112 detects malfunction during usage of a gas and outputs a safety signal to the control unit 114. The function setting unit 116, which will be described later, sets safety function of the monitoring unit 112. The monitoring unit 112 performs monitoring operation in connection with the safety function program set by the function setting unit 116.

In relation to the safety function, there is available a function of performing processing for safety purposes by detecting various malfunction events attributable to an excess flow, an excess in operating time, detection of leakage, anomalous pressure, detection of pulsation, operation of a seismoscope, operation of an alarm, and the like. There are the following functions in relation to; for instance, detection of malfunction.
(1) Excess in total maximum flow ... arising when the total flow achieved in a given period exceeds a reference flow.
(2) Excess in individual maximum flow ... arising when a difference between a current flow and a previous flow is equal to or greater than a predetermined value every time a flow is measured.
(3) Excess of a duration of safety ... arising when an appliance is continually used in excess of an allowable continual operating time specified for each flow.
(4) Detection of pressure rise ... arising when an increase in pressure level to a predetermined level or more is detected.
(5) Detection of pressure drop ... arising when a decrease in pressure level to a predetermined level or below is detected.
(6) Detection of operation of a seismoscope ... arising when activation of a seismoscope resultant from a tremor of an earthquake, or the like, is detected.
(7) Detection of minute leakage ... arising when a predetermined quantity of a minute leakage of flow has been detected for a predetermined number of days.
(8) Detection of pulsation ... arising when a flow fluctuation or a pressure fluctuation of predetermined level or more is detected.
(9) Detection of operation of an alarm ... arising when activation of various alarms is detected.

A safety function storage unit 138 stores a safety function program for implementing the safety functions (1) to (9). Desired safety function is selected, whereby a corresponding safety function program is selected from the safety function storage unit 138, and safety function implemented by the safety function program is set. As mentioned previously, an alarm operation and a cutoff operation are provided as processing operations performed when malfunction is detected by the safety function. When an anomaly is detected by the selected safety function, cutoff operation is performed. When an anomaly is detected by an unselected safety function, alarm operation is performed.

The IC card 118 has an unillustrated storage region and a control region that reads/writes data from and in the storage region; and is also called a prepaid card. The storage region of the IC card 118 has a first area for writing information about the quantity of available gas and a second area for writing various pieces of information including safety selection information for selecting a safety function.

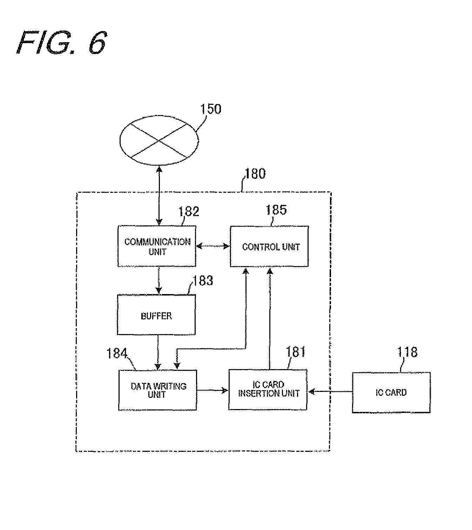

The card charger 180 has the a function of downloading the quantity of available gas and safety function stored in the server 170 connected to the network 150 and writing the thus-downloaded quantity and function into the IC card 118. Fig. 6 is a block diagram showing the general configuration of the card charger 180. In Fig. 6, the card charger 180 is made up of a card insertion unit 181, a communication unit 182, a buffer (RAM is primarily used) 183, a data writing unit 184, and a control unit 185.

The communication unit 182 establishes connection with the network 150 by use of a communication protocol, such as a TCP/IP (Transmission Control Protocol/Internet Protocol), to thus access the server 170 and download information from the server 170. The buffer 183 temporarily stores the information downloaded by the communication unit 182. The data writing unit 184 writes the information stored in the buffer 183 into the IC card 118 inserted into the card insertion unit 181. The information downloaded from the server 170 includes the quantity of available gas and safety selection information. The quantity of available gas is written into the first area of the storage region of the IC card 118, and safety selection information is written into the second area. In addition to the safety selection information, the information required for the use of the IC card 118 is also written into the second area of the storage region of the IC card 118. Since the safety functions are of various types, an optimum safety function is selected according to a use environment of the user, whereby the safety selection information corresponding to the selected safety function is written into the second area of the IC card 118.

The control unit 185 detects insertion of the IC card 118 into the card insertion unit 181 and controls operation of the communication unit 182 and operation of the data writing unit 184.

The server 170 has a communication function for establishing a connection with the network 500 by use of a communication protocol, such as a TCP/IP; establishes a communication with the user's terminal 160 using a similar communication protocol, such as a personal computer, a portable phone, a PHS (Personal Handy-Phone System), and a PDA (Personal Digital Assistant); imparts the terminal 160 with an application for purchasing a gas and safety function; and acquires information in association with user's purchasing operation performed by way of the terminal 160. The quantity of available gas purchased by the user of the terminal 160 and the safety selection information corresponding to the safety function are stored. When a download request is issued by the card charger 180, the information registered in the IC card 118 is verified. When the information is matched, stored information including the quantity of available gas and the safety selection information is transmitted.

The server 170 also has a charging function and performs charging operation at the time of purchase of a gas and safety function. Consequently, after purchasing a gas and safety function by use of the terminal 170, the user goes to a location where the card charger 180 is installed and inserts the IC card 118 into the card charger 180 installed at that location, whereby the quantity of available gas and the safety selection information, which have been purchased, can be stored (charged) in the IC card 118. The IC card 118 storing the quantity of available gas is inserted into the IC card insertion unit 120 of the gas meter 100, whereby only the purchased quantity of available gas can be used, and a feeling of security; that is, a safety function, can also be acquired.

When a gas bill and a safety function bill are separately paid at the time of purchase of a gas and safety function, the quantity of available gas remains unchanged regardless of the number of selected safety functions. However, when the gas bill and the safety function bill are paid in one lump sum, the quantity of available gas changes according to the number of selected safety functions. Specifically, the larger the number of selected safety functions, the smaller the quantity of available gas. Conversely, the smaller the number of selected safety functions, the greater the quantity of available gas. The safety function is an optional function. The user has an option to or not to purchase a safety function. Even when the safety function is not purchased, a safety function pertaining to an excess in total maximum flow, for instance, is selected as a default safety mode. Safety selection information for selecting the safety function is written into the IC card 118. In the present embodiment, the safety function pertaining to an excess in total maximum flow, for instance, is assumed to be selected as a default safety mode.

The IC card insertion unit 120 is an area of the gas meter 100 that accepts the IC card 118. When using a gas, the user inserts the purchased IC card 118 into the IC card insertion unit 120. When the IC card 118 is inserted into the IC card insertion unit 120, the IC card reading unit 122 reads information from the IC card 118. At this time, all of the pieces of information stored in the IC card 118 are collectively read. As a result of the IC card reading unit 122 reading all of the pieces of information stored in the IC card 118, memory of the IC card 118 becomes empty.

When the thus-read information is information about the quantity of available gas, the information is temporarily retained in the IC card reading unit 122. Next, when the IC card determination unit 126, which will be described later, determines that the IC card 118 is normal, the information about the quantity of available gas is sent to the control unit 114 by way of the IC card determination unit 126. The control unit 114 adds the information about the quantity of available gas to the information about a remaining available quantity from the remaining available quantity count unit 124 and stores a result of addition in the remaining available quantity count unit 124. Meanwhile, when the information read by the IC card reading unit 122 is information other than the information about the quantity of available gas, the thus-read information is output to the safety function selection unit 136 and the IC card determination unit 126. The remaining available quantity count unit 124 subtracts the flow computed by the flow computing unit 110 from a current remaining available quantity; decrements the remaining available quantity; and outputs the remaining available quantity to the control unit 114. The control unit 114 determines a remaining available quantity from the remaining available quantity count unit 124 and controls the cutoff valve 104 at a point in time when a predetermined quantity is achieved, thereby cutting off a gas supply.

The safety function selection unit 136 performs detection as to whether or not safety selection information is included in the information read by the IC card reading unit 122. When the safety selection information is present, a corresponding safety function program is selected from a plurality of safety function programs stored in the safety function storage unit 138. The thus-selected safety function program is output to the function setting unit 116. In this case, when a plurality of pieces of safety selection information are included, corresponding safety function programs are respectively selected, and the thus-selected programs are output to the function setting unit 116.

The IC card determination unit 126 determines, from the information read from the IC card reading unit 122, whether or not the IC card 118 is normal. When determined that the IC card 118 is normal, the IC card determination unit outputs a valid signal to the function setting unit 116. When determined that the IC card 118 is not normal, the IC card determination unit outputs an invalid signal to the function setting unit 116. The IC card determination unit 126 outputs a result of determination of the IC card 118 to the control unit 114.

When the valid signal is output from the IC card determination unit 126, the function setting unit 116 outputs the safety function program selected by the safety function selection unit 136 to the monitoring unit 112. Pursuant to the safety function program from the function setting unit 116, the monitoring unit 112 monitors the flow data pertaining to the flow computing unit 110 and anomaly detection signals from various sensors. When occurrence of an anomaly is determined, a safety signal is output to the control unit 114, thereby activating the cutoff valve 104. When detected an anomaly that cannot be managed by the safety function program from the function setting unit 116, the monitoring unit 112 performs alarming operation. The alarming operation means sounding of an unillustrated beeper, blinking of a light emitting element, and the like.

When the IC card 118 is determined to be normal from the determination result from the IC card determination unit 126, the control unit 114 determines that the safety function program is effective and brings the program into an operating state. When an event meeting working conditions for the safety function has arisen, processing compliant with safety function program is performed. In contrast, when the IC card 118 is not normal, the safety function program is determined to be invalid and remains inoperative. In a case where the IC card 118 is normal and in an operating state, the control unit 114 cuts off a gas supply when a safety signal is output from the monitoring unit 112. When the gas supply is cut off, the cutoff valve 104 is activated, to thus cut off the passageway 102.

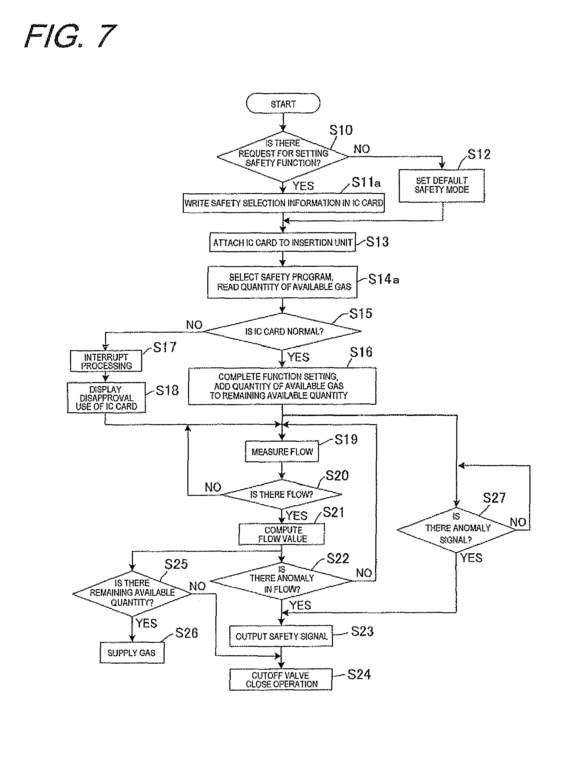

Operation of the gas meter system of the embodiment will now be described in detail. Fig. 7 is a flowchart showing processing procedures employed at the time of operation of the gas meter system of the third embodiment of the present invention.

First, the server 170 determines whether or not there is a request for setting a safety function as well as for setting the quantity of available gas when the user purchases a gas (step S10). In this case, when there is a request for setting the safety function and the user performs operation for purchasing the safety function, a safety function setting request arises. When a safety function setting request has arisen, the card charger 180 writes into the IC card 118 safety function selection information corresponding to the safety function purchased (selected) by the user (step S11a). When safety function setting request has not arisen, a default safety mode (e.g., only a safety mode for an excess in total maximum flow) is set (step S12). Specifically, the card charger 180 writes into the IC card 118 the safety selection information corresponding to the default safety mode.

After various pieces of information have been written into the IC card 118, the user inserts the IC card 118 into the IC card insertion unit 120 (step S13). Upon detection of insertion of the IC card 118 into the IC card insertion unit 120, the IC card reading unit 122 collectively reads all of pieces of information written in the IC card 118. After all of the pieces of information have been read, the safety function program corresponding to the safety selection function is selected from the safety function storage unit 138. The quantity of available gas commensurate with a charged payment charged in the IC card 118 is read (step S14a). The thus-selected safety function program is output to the function setting unit 116.

Next, the IC card determination unit 126 makes a determination, from the information read from the IC card 118, as to whether or not the IC card 118 is normal (step S15). When the IC card 118 is normal, a valid signal is output to the function setting unit 116. When the IC card 118 is determined not to be normal, an invalid signal is output to the function setting unit 116. The IC card determination unit 126 also outputs a result of determination of the IC card 118 to the control unit 114. When the IC card 118 is not normal, subsequent processing is interrupted (step S17). A message indicating that the IC card 118 cannot be used (is anomalous) is displayed on an unillustrated display unit (step S18). Subsequently, processing proceeds to step S19. Function setting is thus completed thus far, and there is performed processing for adding the quantity of available gas commensurate with the payment charged in the IC card 118 to the remaining available quantity (step S16).

When processing proceeds to the next step while the IC card 118 is determined to be normal, the flow measurement unit 106 measures a gas flow (step S19). Next, a determination is made as to whether or not there is a flow (step S20). When there is a flow, the flow computing unit 110 computes a flow value (step S21). Further, when the flow is determined not to be present in step S20, processing returns to flow measurement pertaining to step S19, where similar processing is iterated. After calculation of the flow value, the monitoring unit 112 determines whether or not the flow has an anomaly, such as an excessive flow (step S22). When an anomaly is determined to be in the flow in step S22, processing proceeds to the next processing. When an anomaly is determined not to be in the flow, processing returns to flow measurement pertaining to step S19, where similar processing is iterated.

The monitoring unit 112 determines whether or not an anomaly signal, such as the pressure detection signal from the pressure sensor 108, the seismic signal from the seismoscope 132, and an anomaly detection signal from the alarm 134, is output (step S27). In step S27, when the anomaly signal is output, processing proceeds to the next step. When the anomaly signal is not output, processing pertaining to step S19 is iterated.

When an anomaly is in the flow or when an anomaly signal is output, the monitoring unit 112 determines occurrence of malfunction and outputs a safety signal to the control unit 114 (step S23). When the safety signal is output, the control unit 114 causes the cutoff valve 104 to perform closing action, thereby close the passageway 102 and cutting off the gas supply (step S24).

Meanwhile, the control unit 114 determines from a count value of the remaining available quantity count unit 124 whether or not there is a remaining available quantity (step S25). When there is a remaining available quantity, the gas supply is made continual. When there is no remaining available quantity, the cutoff valve 104 is activated, to thus close the passageway 102 and cut off the gas supply (step S24).

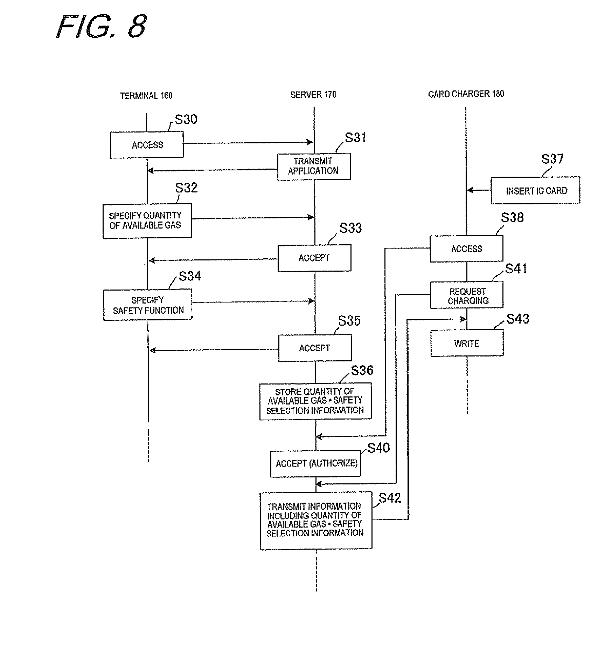

Next, processing for charging the IC card 118 in the gas meter system of the third embodiment of the present invention will be described by reference to Fig. 8.
First, the terminal 160 makes an access to the server 170 (step S30). By means of the access, the server 170 transmits to the terminal 160 an application for use in purchasing a gas and safety function (step S31). Upon acquisition of the application, the terminal 160 executes the application, whereupon a screen for purchasing a gas and safety functions is displayed on a display section (not shown) of the terminal 160. Upon viewing the display, the user inputs a desired quantity of gas. When the quantity of available gas is input, the terminal 160 provides the server 170 with a specification of the quantity of available gas (step S32). Upon receipt of the specification of the quantity of available gas, the server 170 notifies the terminal 160 of receipt of the specification (step S33).

Upon receipt, from the server 170, of the notification about receipt of the quantity of available gas, the terminal 160 provides a display for notifying the user that the quantity of available gas is accepted. Upon viewing the display, the user then selects safety function that the user desires to purchase. When safety function is selected, the terminal 160 provides the server 170 with a specification of the selected safety function (step S34). Upon receipt of the specification of the safety function, the server 170 notifies the terminal 160 that the specification is received (step S35). The thus-accepted quantity of available gas and the safety selection information for use in selecting safety function are stored (step S36). After the server 170 has saved the quantity of available gas purchased by the user and the safety selection information, the user goes to the location where the card charger 180 is installed and inserts the IC card 118 into the card charger 180 (step 37), whereupon the card charger 180 makes an access to the server 170 (step S38). Upon receipt of an access from the card charger 180, the server 170 accepts the access, thereby authenticating the IC card 118 (step S40). When a result of authentication of the registered information about the IC card 118 shows that the registration information is matched, a subsequent request is accepted. In contrast, the registration information is not matched, a subsequent request is rejected, whereupon communication with the communication with the card charger 180 is completed.

When communication between the server 170 and the card charger 180 is continued on the assumption that the registration information about the IC card 118 is matched, the card charger 180 transmits a charge request (step S41). Upon receipt of the charge request from the card charger 180, the server 170 transmits stored information, which includes the quantity of available gas and safety selection information, to the card charger 140 (step S42). When the information including the quantity of available gas and safety selection information is transmitted to the card charger 180, the card charger 180 writes the information into the IC card 118 (step S43). In this case, as mentioned above, the quantity of available gas is written into the first area of the storage region of the IC card 118, and all of the pieces of remaining information, including the safety selection information, are written into the second area. As a result, the information including the quantity of available gas and safety selection information is charged in the IC card 118. The user can use a gas by inserting the IC card 118 into the IC card insertion unit 120 of the gas meter 100.

As mentioned above, according to the embodiment, the quantity of available gas can be purchased by use of the terminal 160, such as a personal computer, a portable phone, a PHS, and a PDA. Of a plurality of safety functions, an optimum safety function can be selected and purchased according to a use environment. Further, the quantity of available gas and the safety function, which have been purchased, can be written into the IC card 118 by means of the card charger 180. As a result of insertion of the IC card 118, in which the quantity of available gas and the safety function are written, into the IC card insertion unit 120 of the gas meter 100, the quantity of available gas is set, and a corresponding safety function program is read from the safety function storage unit 138, whereby a safety function is set. It becomes possible to use a gas up to a predetermined quantity. When an event fulfilling operating conditions for safety function has arisen in a period during which the gas is available, safety processing for cutting off a gas supply can be performed.

A safety function can be selected from among a plurality of safety functions in accordance with a district where a gas meter is used, a location where a gas meter is installed, an operating state, the quantity of flow consumed, and the like, and the thus-selected safety function can be set. Updating of the safety function in compliance with a version upgrade or addition of new safety function is also possible.

Even when substantially all of the safety functions are set on the gas meter, when the risk of occurrence of an accident attributable to a gas supply is considerably low, and when safety is assured, an accident happens on rare occasion. In such a case, upgrading of the gas meter can also be made possible while advanced safety function for preventing occurrence of a rare accident is taken as an option.

Depending on a district where the gas meter is used, an area where no safety functions are available is also conceived. In such a district, a desire for beefing up safety functions may arise in accordance with future development of infrastructures, an emotional change in the user who places emphasis on safety, and changes in measures of the government, and the like. It is also possible to enable, as an initial response to the desire, selective setting of a safety function for preventing occurrence of an accident, which would otherwise be caused by a gas supply, and enhance safety of the gas supply system by charging a safety function and attempting expansion of the functions of the existing gas meter.

The IC card determination unit 126 determines whether or not the IC card 118 is normal. When the IC card is normal, the safety function is made valid and operative. In contrast, when the IC card is not normal, the safety function is made invalid and inoperative. Hence, unauthorized use of the IC card can be prevented. Moreover, employment of an IC card enables repeated use, which in turn contributes to resource savings.

In the gas meter system, the gas meter 100 is provided with programs for implementing various safety functions, and the terminal 160 is arranged so as to be able to select any programs (i.e., safety selection information is transmitted from the terminal 160 to the gas meter 100 by way of the IC card 118). However, when the IC card 118 is charged, the safety function program selected by the terminal 160 can also be written into the IC card 118. In this case, programs for implementing various safety functions may also be stored in the server 170, and the terminal 160 may acquire a corresponding program from the server 170 and transmit the thus-acquired program to the card charger 180. Moreover, only safety selection information may also be previously transmitted to the card charger 180. When the IC card 118 is charged, a corresponding program may be acquired from the server 170 and written into the IC card 118.

When the remaining available quantity decreases faster than a predetermined rate in the middle of a decrease in remaining available quantity being monitored by the remaining available quantity count unit 124, a large gas escape has arisen in a pipe, and the like. Alternatively, anomalous usage of a gas exceeding gas supply capability may be determined to have arisen, and predetermined processing operation may also be performed. The function may also be set in a safety function program or implemented as an additional function of the IC card 118.

In the present embodiment, the quantity of available gas and the safety selection information are stored in the server 170. However, as a matter of course, it is also possible for the terminal 160 make a direct access to the card charger 180, to thus save the quantity and the information into the card charger 180. However, in this case, the card charger 180 is specified, the purchased quantity of available gas and the safety selection information can be written into the IC card 118 by means of solely the thus-specified card charger 118. So long as the server 170 is employed, all of the card chargers 180 can write the quantity of available gas and safety selection information into the IC card 118.

Although the present invention has been described in detail by reference to the specific embodiments, it is manifest for those skilled in the art that the present invention are susceptible to various alterations or modifications without departing the spirit and scope of the present invention.

The present patent application is based on Japanese Patent Applications (JP-A-2008-057353, JP-A-2008-057354, and JP-A-2008-058786) filed on March 7, 2008 in Japan, contents of which are incorporated herein by reference.

The present invention is not limited to the contrivances described in connection with the first through third embodiments and is also scheduled to undergo alterations or applications, which will be envisaged by those skilled artisans on the basis of the descriptions of the present patent specification and the known techniques. The alterations and applications shall also fall within a scope for which protection is sought.

### Industrial Applicability

Safety functions can be set, as appropriate, according to a use environment; hence, the present invention yields an advantage of the ability to enhance safety protection, and the present invention is useful for a gas meter that measures the quantity of gas consumed, a gas meter system including the gas meter, and the like.

## Claims

1. A gas meter comprising:
a flow measurement unit that measures a quantity of gas flowing through a gas passageway;
a flow computing unit that computes, from a flow value measured by the flow measurement unit, predetermined flow data;
an insertion unit into which there is inserted a portable storage unit that stores a quantity of available gas commensurate with a bill paid by a user and that stores a program for executing as a safety function pertaining to usage of a gas at least one safety function among a plurality of safety functions for which the user has made a selection and payment;
an information reading unit that reads information stored in the storage unit inserted in the insertion unit;
a remaining available quantity count unit that subtracts a flow determined by the flow computing unit from the quantity of available gas read by the information reading unit, thereby determining a remaining available quantity;
a program storage unit that stores the program read by the information reading unit; and
a control unit that performs predetermined processing operation when the remaining available quantity determined by the remaining available quantity count unit has reached a predetermined remaining quantity and when an event fulfilling operating conditions for safety function corresponding to the program stored in the program storage unit has arisen.

2. The gas meter according to claim 1, further comprising:
a determination unit that determines, from information read by the information reading unit, whether or not the storage unit is normal, wherein
the control unit makes the program read by the information reading unit valid and brings the program into operating state when the storage unit is determined to be normal from a determination result from the determination unit.

3. The gas meter according to claim 1 or 2, wherein the storage unit is a data-rewritable IC card.

4. A gas meter system comprising:
the gas meter defined in any one of claims 1 through 3; and
the storage unit.

5. A gas meter comprising:
a flow measurement unit that measures a quantity of gas flowing through a gas passageway;
a flow computing unit that computes, from a flow value measured by the flow measurement unit, predetermined flow data;
an insertion unit into which there is inserted a portable storage unit that stores a quantity of available gas commensurate with a bill paid by a user and that stores information for selecting as safety function pertaining to usage of a gas at least one safety function among a plurality of safety functions for which the user has made a selection and payment;
an information reading unit that reads information stored in the storage unit inserted in the insertion unit;
a remaining available quantity count unit that subtracts a flow determined by the flow computing unit from the quantity of available gas read by the information reading unit, thereby determining a remaining available quantity;
a safety function storage unit that stores a safety function program for respectively performing the plurality of safety functions;
a safety function selection unit that selects a safety function program, which corresponds to the information read by the information reading unit, from a plurality of safety function programs stored in the safety function storage unit;
a control unit that performs predetermined processing operation when the remaining available quantity determined by the remaining available quantity count unit has reached a predetermined remaining quantity and when an event fulfilling operating conditions for the safety function program selected by the safety function selection unit has arisen.

6. The gas meter according to claim 5, further comprising:
a determination unit that determines, from information read by the information reading unit, whether or not the storage unit is normal, wherein
the control unit makes the safety function program selected by the safety function selection unit valid and brings the program into operating state when the storage unit is determined to be normal from a determination result from the determination unit.

7. The gas meter according to claim 5 or 6, wherein the storage unit is a data-rewritable IC card.

8. A gas meter system comprising:
the gas meter defined in any one of claims 5 through 7; and
the storage unit.

9. A gas meter system comprising:
a portable storage device that enables writing and reading of data;
an information writing device that stores information about a safety function, which has been selected by a user terminal by way of an electric communication line from a plurality of safety functions serving as safety functions pertaining to usage of a gas, and that writes the stored information into the storage device pursuant to a request for writing information into the storage unit; and
a gas meter that has a safety function program for respectively performing the plurality of safety functions, that reads the information written in the storage device, to thus select a safety function program corresponding to the read information, and that performs predetermined processing operation when an event fulfilling operation conditions for the selected safety function program has arisen.

10. The gas meter system according to claim 9, wherein the storage device is a data-rewritable IC card.
